# EUROPEAN PATENT APPLICATION

(11) **EP 1 172 977 A1**
(43) Date of publication of application: **16.01.2002**
(21) Application number: 00202540.1
(22) Date of filing: 14.07.2000
(51) Int. Cl.: H04L 12/64, H04Q 11/04

(54) **A method and a system for data exchange over a data network such as the public internet**

(71) Applicant: Koninklijke KPN N.V., 9726 AE Groningen (NL)
(72) Inventor: Hekstra, Andries Pieter, 2252 KM Voorschoten (NL); Phelan, Robert Paul, 3013 AL Rotterdam (NL)
(74) Representative: Wuyts, Koenraad Maria

(57) **Abstract**

A method of and a system for data exchange over a data network (1), such as the Public Internet (PI), between a user party (7) and a destination party (13). The destination party (13) connects to the data network (1) and the user party (13) has access to the data network (1) through one of a plurality of intermediate data network service providers (4; 5; 6) connecting to the data network (1). In accordance with the invention a direct data link (16) may be established between the data network service providers (4; 5; 6) for alternatively routing the data exchange over this direct data link (16). The direct data link (16) is established through a switched data network (15), such as the Public Switched Telephone Network (PSTN), the Integrated Services Digital Network (ISDN), and an Asynchronous Transfer Mode network (ATM).

## Description

### Field of the Invention

The present invention relates to data communication and, more specifically, to a method of and a system for data exchange over a data network such as the public Internet.

### Background of the Invention

Data communication over a data network such as the worldwide public Internet has become increasingly popular and subject to wide public use.

In its basic form, the Internet is comprised of a plurality of world wide distributed data servers interconnected by high speed data links. Access to the Internet is provided through data network service providers, also called Internet Service Providers (ISPs).

A user party, wishing to exchange information over the Internet, has to set up a data access link between the user equipment, such as a multimedia personal computer, for example, and an ISP. Generally, the access data link is set up via a Public Switched Telephone Network (PSTN), the Integrated Services Digital Network (ISDN), the Global System for Mobile communication (GSM), an Asynchronous Transfer Mode network (ATM), the Asynchronous Digital Subscriber Line (ADSL) network, or a Cable Television network (CaTV), for example. To reduce the communication costs for the use of the access data link, a plurality of local ISPs have been set up. In practice, users have access to the Internet via a single or a few ISPs on a subscription basis.

Unfortunately, the increased use of the Internet has resulted in a decrease of the performance or Quality of Service (QoS) of the data exchange, such as relatively long delay times in the delivery of messages, lost of messages, etc. At some point, the satisfaction of the user with regard to the services provided by the Internet declines, in particular if the performance drops below an acceptable level.

Because of the public character of the Internet, a user may experience difficulties in transmitting and receiving sensitive information over a plurality of servers and ISPs.

Further, users may have a temporary need for extra data transmission capacity, which should be available in a flexible manner.

### Summary of the Invention

It is an object of the present invention to provide an improved data exchange over a data network such as the public Internet.

It is a further object of the present invention to enhance the services provided by a data network service provider, such as an ISP, for exchanging data over a data network, such as the Internet.

According to the present invention there is provided a method of data exchange over a data network such as the public Internet between a user party and a destination party, wherein the destination party connects to the data network and the user party having access to the data network through one of a plurality of intermediate data network service providers connecting to the data network, characterized by establishing a direct data link between the data network service providers for alternatively routing the data exchange over this direct data link.

The invention provides an alternative routing of the data to be exchanged, by setting up a direct data link between data network service providers. Instead of the normal routing of the data exchange from the local ISP, to which the user party connects, over the data network to the destination party, the invention provides for a bypass of the data network. That is, the local data network service provider routes the data to a remote data network service provider from which the data eventually is exchanged with the destination party.

The direct data link may be established over any available communications network suitably arranged for data transfer, for example a switched data network providing an individual point-to-point connection such as a PSTN, ISDN and GSM network, or a packet switched data transfer network like an ATM network.

The direct data link may be established, for example, automatically once the data transfer over the data network experiences a performance level below a set level. The performance level may be calculated from, for example, at least one of a group of measurements including communication delays, lost messages, available average bandwidth, requested bandwidth and traffic volume monitoring.

However, a direct data link may also be established at the request of a user party if he or she does not wish to exchange sensitive or other information over a non-secure data network, such as the public Internet, but rather over a dedicated or individual switched link of the PSTN or the ISDN, for example.

In accordance with the present invention, the direct data link may also be set up dependent on a particular application or application program running by the user party and/or the destination party. For example dependent on a particular required bandwidth or transmission speed, i.e. data transfer capacity.

To this end, in a yet further embodiment of the invention, it is provided to select the direct data link from a group of direct data links having different communication speeds or data transmission rates such as 9.6 kbps, 28.8 kbps, 56 kbps, unrestricted 64 kbps, etcetera.

If the direct data link is automatically established because of a performance drop in an existing data exchange over the data network, for example, or if at the start of a data exchange it has been established that a required performance level or QoS is not available due to congestion in the data network, for example, the direct data link is advantageously set up with such a remote data network service provider that the troubled part of the network will be bypassed.

In a preferred embodiment of the invention, a remote data network service provider is selected which, from a topographic point of view, is located geographically closest to the destination party, or even the data network service provider through which the destination party connects to the data network, if available. This, for reducing the data transfer to an as little as possible part of the data network.

In the context of the present invention, the term destination party includes any one of a group including a data network server, a data network service provider, a local area network and another user party.

The invention provides also a system for data exchange over a data network such as the public Internet between a user party and a destination party, wherein the destination party connects to the data network, and the user party has access to the data network through one of a plurality of intermediate data network service providers connecting to the data network, characterized in that the data network service providers comprise router means for establishing a direct data link between the data network service providers for alternatively routing the data exchange over this direct data link.

In a preferred embodiment of the invention, the router means are arranged for establishing the direct data link through a switched data network such as a PSTN, ISDN or ATM network.

For automatically setting up the direct data link dependent on a performance level or QoS of the data network, in a yet further embodiment of the invention means are provided for determining a performance level of the data exchange over the data network, means for comparing the determined performance level with a set level and for activating the router means for establishing the direct data link if the determined performance level is below the set level. Further, the router means may be arranged for being activated from a particular user or destination party application for establishing the direct data link, such as a direct data link chosen from a group of direct data links having different communication speeds or data transmission rates.

For establishing the direct data link on demand, in another embodiment of the invention, the user party comprises means for activating the router means. These means may include, for example, a button or icon displayed on a computer monitor or display, including a display of a mobile radio terminal, for example.

It will be appreciated that, among others for charging purposes, a data network service provider will provide the novel service according to the present invention to its users exclusively on a subscription basis. Further, contracts may have to be established with data network service providers between which a direct data link may be set up. Accordingly, in a yet further embodiment of the invention, the data network service provider comprises authentication and authorization means for controlling access of a user party for establishing the direct data link, selection means for selecting a data network service provider of the plurality of data network service providers for establishing the direct data link and means for analysing and mapping data network addresses of the user party, destination party and data network service providers for routing the data exchange between the user party and the destination party via the direct data link.

The authentication and authorization means, the selection means and the analysing and mapping means may connect to data base means for storage and retrieval of information data required for establishing the direct data link and routing of the data exchange between the user party and the destination party. The information data may be stored in the form of a look-up table or the like.

The invention further provides data network service provider equipment arranged for establishing data exchange between a user party and a destination party; user terminal equipment arranged for providing data exchange between a user party and a destination party; destination terminal equipment, including data network server equipment, local area network equipment and further user terminal equipment, arranged for providing data exchange in accordance with the present invention as generally disclosed above.

The above-mentioned and other features and advantages of the invention are now illustrated in the following description with reference to the enclosed drawings. Without the intention of limitation, but rather for explanatory purposes, it is assumed that the data network for exchanging data between a user party and a destination party is the public Internet.

### Brief Description of the Drawings

Figure 1 shows in a schematic and illustrative manner use of the present invention involving the Internet and the public switched telephone network.
Figure 2 shows a simplified flow chart diagram of an embodiment of the method according to the present invention.
Figure 3 shows schematically, a more detailed illustration of a user party and data network server provider equipment in accordance with the present invention.

### Detailed Description of the Embodiments

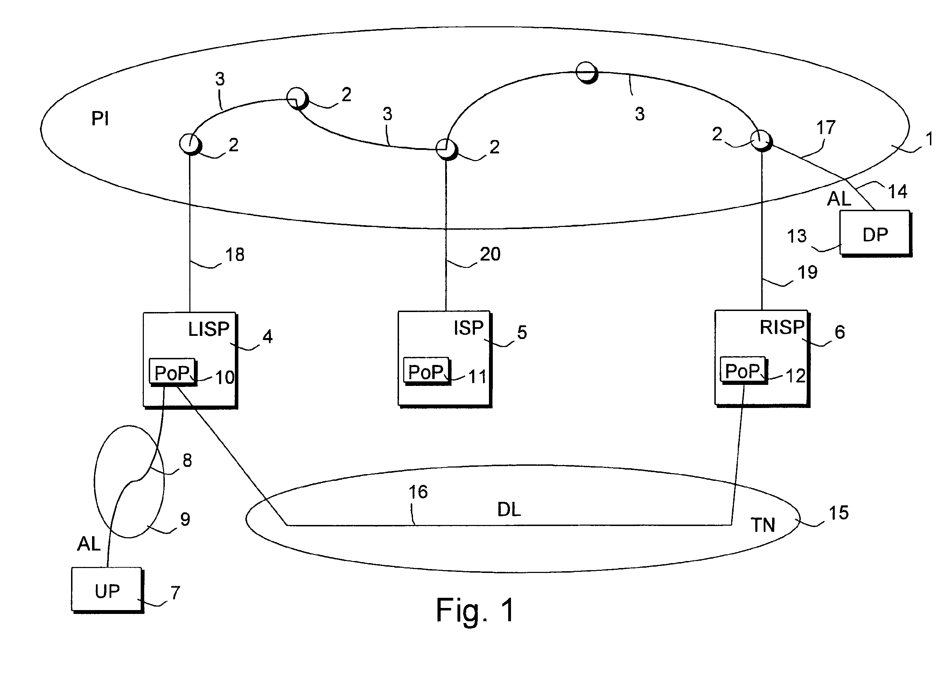

In figure 1, reference numeral 1 denotes the worldwide Public Internet (PI) comprising, in its basic form, a plurality of world wide distributed Data Servers (DS) 2 interconnected by high speed Internet data Links (IL) 3. Access to the PI 1 is provided by Internet Service Providers (ISPs) 4, 5, 6, connecting 18, 19, 20 to the PI 1. For illustrative purposes, only three ISPs have been shown. In practice, however, a plurality of ISPs connect to the PI 1.

An ISP 4, 5, 6 provides access to the PI 1 for users which are registered with a particular ISP, for example on a subscription basis. In the embodiment shown, User Party (UP) 7 connects via an Access Link (AL) 8 to the ISP 4. The AL 8 may be a link through the Public Switched Telephone Network (PSTN), the Integrated Services Digital Network (ISDN), the wireless Global System for Mobile communications (GSM) or a dedicated network such as a Cable Television network (CaTV), for example. Suitable user equipment for accessing the IP 1 are any multimedia desktop or laptop personal computer, a mobile telephone providing Internet access, etcetera.

Data between a UP and the PI are exchanged through a so-called Point of Presence (PoP) 10, 11, 12 of an ISP 4, 5, 6, respectively. PoP is a typical Internet term denoting a node in the Internet network. Typically it is a high performance interconnection to a backbone of the Internet.

As shown in figure 1, a Destination Party (DP) 13 connects directly to the PI 1 by an AL 14. Those skilled in the art will appreciate that DP 13 may also connect to the PI 1 through an ISP, for example. The DP 13 may be any of a group including a data network server, a data network service provider, a Local Area Network (LAN) or another user party.

Reference numeral 15 denotes a worldwide Telecommunications Network (TN), such a switched point-to-point network like the PSTN or the ISDN, a packet oriented telecommunications network like an Asynchronous Transfer Mode (ATM) network, or a wireless satellite communication network, for example, capable of transferring data. For the purpose of the description, it is assumed that the PI 1 and the TN 15 are functionally separate networks having a more or less global coverage. Note that the PI 1 and the TN 15 may use the same infrastructure like cables, switches, etcetera.

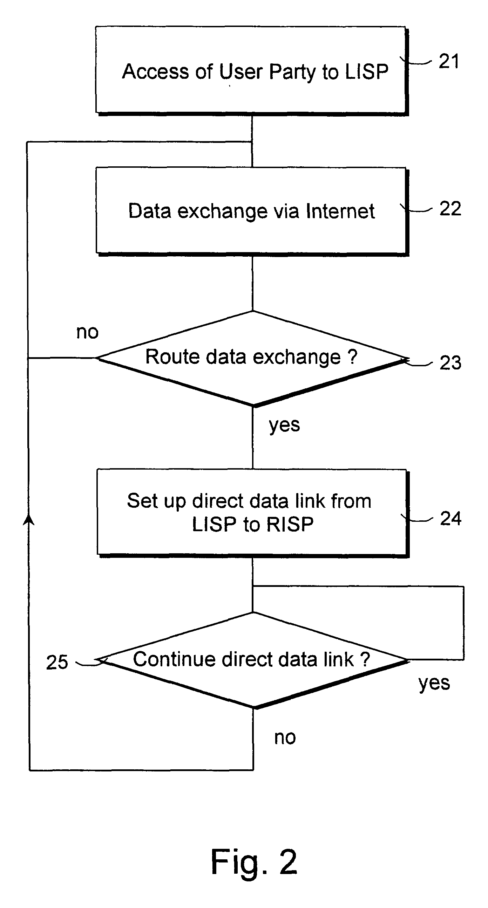

Reference is now made to the simplified flow chart diagram of figure 2. It is assumed that UP 7 has gained access to ISP 4 located geographically near the UP 7; block 21. For explanatory purposes, the ISP 4 is hereafter called a Local ISP (LISP). Further, it is assumed that via the LISP 4, data exchange with the remote DP 13 has been established over the PI 1. That is, data between UP 7 and DP 13 will be exchanged via AL 8, the LISP 4, one or plurality of the DS 2 and the IL 3, and eventually AL 14, and vice versa; block 22.

In accordance with the present invention, the data exchange between UP 7 and DP 13 may be routed through the TN 15 by establishing a Direct data Link (DL) 16 between the PoP 10 of LISP 4 and the PoP of another ISP, such as PoP 11 of ISP 6, hereafter referred to as Remote ISP (RISP); block 24.With the present invention, data between the UP 7 and the DP 13 are routed over AL 8, LISP 4, DL 16 of TN 15, RISP 6, part 17 of the IP 1 and AL 14.

The bypass of IP 1 via the DL 16 can be set up in the case of congestion in the IP 1, or another reasons causing a drop in or a low level of service performance to the data exchange between the UP 7 and the DP 13 via the IP 1, such as equipment failures, large delays in delivering messages, etcetera.

However, the bypass of IP 1 via the DL 16 can also be set up if the user requires additional or extra data transfer capacity, for example, if the QoS of the data exchange has to be improved, or if a secure data link is required, for example.

The bypass direct data link may be established automatically from performance or Quality of Service (QoS) measurements of the data exchange over the PI 1 by the LISP 4, for example. However, the DL 16 can also be established directly by the UP 7, for example, if additional data exchange capacity or a more secure connection is required not involving a plurality of DS 2 and Internet links 3. Alternatively, a user or other application program may be configured for setting up a DL bypass via the TN 15; decision block 23.

Preferably, an RISP is selected which, from a topographic point of view, is geographically closest to the DP 13. However, an RISP may be selected which, in terms of speed and quality provides a required or even the best performance. In anyway an RISP is chosen such that the remaining part 17 of the data exchange between the UP 7 and the DP 13 over the PI 1 can be established with a required QoS, satisfying the needs of a user.

As illustrated by decision block 25, the bypass DL 16 may be kept permanently during a particular data exchange session between a UP and a DP, or as long as strictly required in view of the degraded QoS, a particular application program, or dependent on the type of information transfer, such as during the exchange of sensitive data, for example.

However, it is also feasible to set up the bypass DL 16 for bypass purposes during a particular time of the day, if the demand for services increases, or if problems are to be expected. That is, the bypass DL 16 may be set up ahead of a particular need in order to have the link ready if there is an actual demand for extra or alternative data transfer capacity.

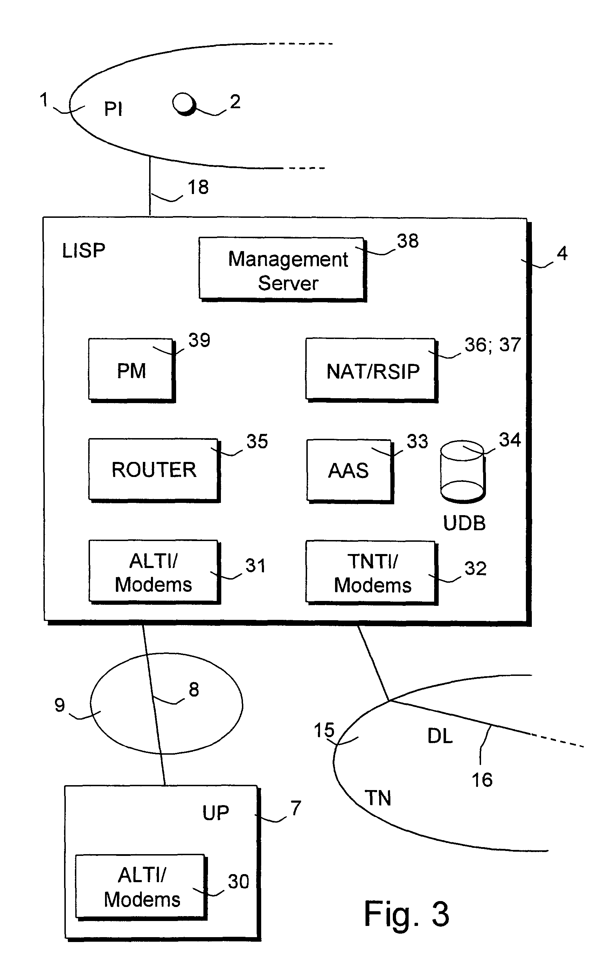

For a more detailed explanation of the invention, reference is now made to Figure 3.

The AL 8 of the UP 7 to the LISP 4 needs to be interfaced to both the UP 7 and the LISP 4. In the case where the Access Network (AN) 9 is the PSTN, for example, the Access Line Termination Interface (ALTI) 30, 31 at the UP 7 and the LISP 4, respectively, can simply be a modem.

Analogous to the ALTI, the connection from an ISP 4, 5, 6 to the TN 15 needs to be interfaced by a Telecommunications Network Termination Interface (TNTI) 32. Again, in the case of the PSTN as the TN 15, the TNTI 32 comprises modem functionality.

Gaining access to the LISP 4 by the UP 7 may require the latter to dial certain numbers or to perform some defined actions to activate the AL 8. Because access to an ISP is, in general, not free but provided on a subscription basis, a user probably will have to enter authentication data, such as a user ID and a password for verification purposes. The authentication data can be typed in by a user or directly be derived from smart cards or the like, in combination with calling line identification, for example, and are processed in Authentication and Authorization Means (AAM) 33 coupled with User Data Base (UDB) means 34 of the LISP 4.

The UP 7 will typically be charged for the use of the novel direct data link bypass service of the present invention, for which the provision of authentication and authorization data may be required too.

After the UP 7 makes contact with the ALTI 31 of the LISP 4, the user will be authenticated by the AAM 33 using the well known RADIUS mechanism, for example. If the authentication is successful, an Internet Protocol (IP) address is allocated from the IP address pool of the LISP 4. At the end of this process the UP 7 has obtained an IP address (IP1) and the user can proceed to access the IP 1 in an transparent manner.

If it is decided to set up a direct data link in accordance with the present invention, either automatically, or by the user by clicking an icon on its terminal display, for example, or a user application program, selection means, which may reside in a Management Server (MS) 38 of the LISP 4, have to select a suitable RISP. Subsequently, the router means 35 of the LISP 4 have to contact the TNTI 32 for accessing the TN 15. Once the direct data link DL 16 has been opened, the LISP 4 will have to go through some kind of authentication and authorization procedure with the RISP 6. This procedure can be similar to the authentication and authorization procedure between the UP 7 and the LISP 4, and the same or other AAS means 33 may be used, resulting in allocating an IP address (IP2) to the LISP 4 from a pool of IP of the RISP 6.

In practice, there are two possible solutions that allow the UP to use an address from the address pool of the RISP, for example. That is, a first method based on Network Address Translation (NAT) and a second method based on the so-called Real Specific Internet Protocol (RSIP). The essential difference between these know methods lies in that for NAT one of the IP addresses (IP1, IP2) is replaced by another IP address, while for RSIP two addresses are used in a nested manner.

Following the NAT method, after the LISP 4 has established the DL 16 with the RISP 6, it requests the IP address (IP2) from the RISP 6. The LISP 4 must contact an NAT server 36. The new address IP2 is passed to the NAT server 36 and address translation is performed as follows. All upstream traffic from the UP 7 is routed through the NAT server 36. The server removes the IP1 address of each IP packet header and substitutes the address IP2 instead. Then traffic is routed over the DL 16 to the RISP 6 and from the RISP 6 over part 17 of the PI 1 and the AL 14 down to the DP 13.

Downstream traffic from the DP 13 to the UP 7 will be sent first to the RISP 6 and then over the DL 16 to the LISP 4. At this point the NAT server 35 is used to remove address IP2 from each header and substitutes IP1. The traffic is now routed to the UP 7.

Following the RSIP method, after the LISP 4 has established contact with the RISP 6, it requests an IP address (IP2) from the address pool of the RISP 6 via well known mechanisms. The UP 7 can use IP2 in two different ways.

First, if the LISP 4 contains an RSIP server 37 and the UP 7 is installed with RSIP client software, the RSIP server 37 passes IP2 to the RSIP client software on the UP 7. The effective IP address for all applications on the UP 7 is now IP2. Outgoing IP packets from the UP 7 are then placed in another outer IP packet, the header of which having destination address DP 13 and source address IP1. The header of the inner packet has destination address DP 13 and source address IP2. Traffic is routed to the RSIP server 37 which strips off the outer packet and sends traffic with the inner header over the DL 16 to the RISP 6.

Downstream traffic from the DP 13 to the UP 7 is correctly routed to the RISP 6 since IP2 is in the address pool of the RISP 6. Traffic arriving at the LISP 4 via the DL 16 is then tunnelled to the RSIP server 37, provided with an outer packet, and channelled to the UP 7 using IP1 as the destination address in the header of the outer packet. The RSIP client software on the UP 7 strips off the outer packet and passes the inner packet to the IP stack.

Alternatively, the RSIP server 37 can be located in the RISP 6 (not shown). The UP 7 still requires RSIP client software. The process is essentially the same as disclosed above, except that the traffic from the UP 7, that is provided with an outer packet, is sent over the DL 16 to the RSIP server in the RISP 6. The RSIP server strips the outer packet and forwards the traffic to the DP 13. Returning downstream traffic destined for the UP 7 is routed through the RSIP server, packaged and sent over the DL 16 to the LISP 4. The RSIP software in the UP 7 then removes the outer packet.

If the UP 7 is actively communicating with more than one DP 13, since the UP 7 may only use a single IP address at any given time, all active traffic upstream and downstream will be routed over the DL 16 and the RISP 6.

It will be appreciated that for enabling the direct data link in accordance with the present invention, ISPs will have to establish contracts that allow a LISP to set up connections to an RISP and use its PoP. When the LISP establishes a DL, the RISP needs to know, which LISP needs to be charged for the usage of the RISP services and capacities. As a result, the LISP will need to be authenticated by the RISP, e.g. by some standard login procedure with a user name and password, for example. This login procedure will, of course, be hidden for the UP. Calling line identification of the LISP (switched) line number by the RISP can add in the authentication. After the login procedure has been completed, the DL will be a transparent connection to the RISP.

For setting up a DL to a particular RISP, the Management Server 38 in each ISP has been provided with analysing and mapping means. In an embodiment of the invention, the MS 38 comprises a translation table which allows the MS 38 to determine for any given IP destination address one or more telephone numbers or data link identifiers of one or more RISPs in the case of a DL via the PSTN, for example. The mapping information, inclusive the translation table may reside in the UDB 34, for example. The mapping of the IP destination address may in fact depend solely on the Internet domain or subnetwork in which they reside. The telephone number or other DL identifier that may appear as the result of the mapping by the translation table may be restricted to those other ISPs with which an Alternative data Link Peering Contract (ALPC) is in place. It will be appreciated that a priority listing may form part of the selection of a particular RISP.

The PI is by and large a best effort network. Information may be delayed or lost and QoS can vary widely over time. The responsiveness of a connection over the PI 1 can be monitored by an ISP using Performance Monitoring (PM) means 39 operating, for example, using one or more of the following mechanisms:
By "pinging" the destination and measuring the round trip delays to the requested destinations. "Ping" is an IP command send to a certain point in the Internet that instructs the receiver to transmit a message back to the initiator of the ping command;
Information may be extracted from the TCP/IP protocol stack. For example in the case of TCP, traffic information can be collected about the receipt of acknowledgment messages (ACKs) and delayed or lost acknowledgment to/from a certain IP address can be noted. This method actually gives two types of information: the round trip delay of the IL and the IP address of the DP. Information about other transport and application level protocols can be collected in a similar manner, e.g. RTP, HTTP, etcetera.;
By other methods that monitor the average round trip times and communication delays between the UP and DP;
By monitoring the average bandwidth requested by applications running on the UP and comparing with the achieved bandwidth over the PI;
By monitoring the volume of traffic a UP generates and receives.

Note that individual users may have different user profiles and, dependent on the requirements of a user, direct data links having different transport capabilities (transmission rates) may be set up, with a guaranteed QoS and secure data transfer, for example.

It will be appreciated that per LISP a pool of DL can be established. Such a pool may comprise several links which may be shared by the users.

The present invention can be best viewed as providing an overlay network for users of the PI, like a global or META-ISP. The users of the META-ISP may be individual users having a single multimedia computer, local networks or other data sources.

### List of Abbreviations

- AAM: Authentication and Authorization Means
- ACK: Acknowledgement
- ADSL: Asynchronous Digital Subscriber Line
- AL: Access Link
- ALTI: Access Line Termination Interface
- ALPC: Alternative data Link Peering Contract
- AN: Access Network
- ATM: Asynchronous Transfer Mode
- CaTV: Cable Television
- DP: Destination Party
- DS: Data Servers
- GSM: Global System for Mobile communication
- HTTP: Hyper Text Transfer Protocol
- IL: Internet data Links
- IP: Internet Protocol
- ISDN: Integrated Services Digital Network
- ISP: Internet Service Provider
- LAN: Local Area Network
- LISP: Local ISP
- MS: Management Server
- NAT: Network Address Translation
- PI: Public Internet
- PM: Performance Monitoring
- PoP: Point of Presence
- PSTN: Public Switched Telephone Network
- QoS: Quality of Service
- RSIP: Real Specific Internet Protocol
- RTP: Real Time Protocol
- TCP/IP: Transport Control Protocol/Interface Program
- TN: Telecommunications Network
- TNTI: Telecommunications Network Termination Interface
- UDB: User Data Base
- UP: User Party

## Claims

1. A method of data exchange over a data network such as the public Internet between a user party and a destination party, wherein said destination party connects to said data network and said user party having access to said data network through one of a plurality of intermediate data network service providers connecting to said data network, **characterized by** establishing a direct data link between said data network service providers for alternatively routing said data exchange over said direct data link.

2. A method according to claim 1, wherein said direct data link is established through a switched data network such as the Public Switched Telephone Network (PSTN), the Integrated Services Digital Network (ISDN), and an Asynchronous Transfer Mode network (ATM).

3. A method according to any of the previous claims, wherein said direct data link is established if said data exchange over said data network experiences a performance level below a set level.

4. A method according to claim 3, wherein said performance level is based on at least one of a group of measurements including communication delays, lost messages, available average bandwidth, requested bandwidth and traffic volume monitoring.

5. A method according to any of the previous claims, wherein said direct data link is established at the request of said user party.

6. A method according to any of the previous claims, wherein said direct data link is established dependent on a particular application.

7. A method according to any of the previous claims, wherein said direct data link is established from a group of direct data links having different communication speeds.

8. A method according to any of the previous claims, wherein said direct data link is established on a subscription basis.

9. A method according to any of the previous claims, wherein said user party connects to a local data network service provider and said direct link is established between said local data network service provider and a remote data network service provider located geographically closest to said destination party.

10. A method according to any of the previous claims, wherein said destination party is at least one of a group including a data network server, a data network service provider, a local area network and another user party.

11. A system for data exchange over a data network such as the public Internet between a user party and a destination party, wherein said destination party connects to said data network and said user party having access to said data network through one of a plurality of intermediate data network service providers connecting to said data network, **characterized in that** said data network service providers comprise router means for establishing a direct data link between said data network service providers for alternatively routing said data exchange over said direct data link.

12. A system according to claim 11, wherein said router means are arranged for establishing said direct data link through a switched data network such as the Public Switched Telephone Network (PSTN), the Integrated Services Digital Network (ISDN), and an Asynchronous Transfer Mode network (ATM).

13. A system according to any of the claims 11-12, further comprising means for determining a performance level of said data exchange over said data network, means for comparing said determined performance level with a set level and for activating said router means for establishing said direct data link if said determined performance level is below said set level.

14. A system according to any of the claims 11-13, wherein said user party comprises means for activating said router means for establishing said data link.

15. A system according to any of the claims 11-14, wherein said router means are arranged for being activated from a particular application for establishing said direct data link.

16. A system according to any of the claims 11-15, wherein said router means are arranged for establishing said direct data link from a group of direct data links having different communication speeds.

17. A system according to any of the claims 11-16, wherein said data network service provider comprises authentication and authorization means for controlling access of a user party for establishing said direct data link, selection means for selecting a data network service provider of said plurality of data network service providers for establishing said direct data link and means for analysing and mapping data network addresses of said user party, destination party and data network service providers for routing said data exchange between said user party and said destination party via said direct data link.

18. A system according to claim 17, wherein said authentication and authorization means, said selection means and said analysing and mapping means connect to data base means for storage and retrieval of information data required for establishing said direct data link and routing of said data exchange between said user party and said destination party.

19. Data network service provider equipment arranged for establishing data exchange between a user party and a destination party in accordance with any of claims 1-18.

20. User terminal equipment arranged for providing data exchange between a user party and a destination party in accordance with any of the claims 1-18.

21. Destination terminal equipment, including data network server equipment, local area network equipment and further user terminal equipment, arranged for providing data exchange in accordance with any of the claims 1-18.
